# FASCICULE DE BREVET EUROPEEN

(11) **EP 1 998 257 B1**
(45) Date de publication et mention de la délivrance du brevet: **28.04.2010**
(21) Numéro de dépôt: 08103940.6
(22) Date de dépôt: 14.05.2008
(51) Int. Cl.: G06F 13/40, H05K 7/14

(54) **Dispositif de contrôle de communication point à point entre un module et un bus de transmission**
Vorrichtung zur Steuerung einer Punkt-zu-Punkt-Kommunikation zwischen einem Modul und einem Datenübertragungsbus.
Device for controlling point-to-point communication between a module and a transmission bus.

(30) Priorité: 29.05.2007 FR 0755296
(43) Date de publication de la demande: 03.12.2008
(73) Titulaire: Schneider Electric Industries SAS, 92500 Rueil-Malmaison (FR)
(72) Inventeur: Adragna, Jean-Jacques, 06160 Antibes (FR); Chapier, Pascal, 06560 Valbonne (FR); Meurlay, Alain, 06200 Nice (FR)
(74) Mandataire: Dufresne, Thierry

(56) Documents cités:
- US-A- 5 568 610
- US-A- 6 105 091
- US-B1- 6 237 057

## Description

La présente invention se rapporte à un dispositif de contrôle de communication point à point entre un module et un bus de transmission. L'invention trouve une application particulièrement avantageuse dans le domaine des automates programmables.

Un automate programmable ou PLC («Programmable Logical Controller») est un équipement d'automatisme capable de piloter, commander et/ou surveiller un ou plusieurs process, notamment dans le domaine des automatismes industriels, du bâtiment ou de la distribution électrique.

De construction généralement modulaire, un automate programmable PLC est composé de différents modules qui communiquent entre eux par un bus de transmission, appelé généralement bus «fond de panier» (appelé aussi bus «backplane»). Les modules sont fixés mécaniquement dans un rack, lequel comprend un circuit imprimé qui supporte également le bus fond de panier ainsi que les éléments de connexion destinés à coopérer avec des connecteurs présents généralement sur la partie arrière des modules de manière à réaliser la liaison nécessaire entre les modules et le bus. Le nombre de modules dépend bien entendu de la taille et du type de process à automatiser.

Typiquement, un automate programmable peut comporter :
- un module d'alimentation fournissant les différentes tensions aux autres modules à travers le bus fond de panier.
- un module unité centrale UC qui comporte un logiciel embarqué («firmware») intégrant un système d'exploitation OS temps réel, et un programme d'application, ou programme utilisateur, contenant les instructions à exécuter par le logiciel embarqué pour effectuer les opérations d'automatisme souhaitées. Le module UC comporte aussi généralement une connexion en face avant vers des outils de programmation de type ordinateur personnel PC.
- des modules d'entrées/sorties E/S de divers types en fonction du process à commander, tels que E/S numériques ou TOR, analogiques, de comptage, etc. Ces modules E/S sont reliés à des capteurs et des actionneurs participant à la gestion automatisée du process.
- un ou plusieurs modules de communication vers des réseaux de communication (Ethernet, CAN, ...) ou des interfaces homme-machine (écran, clavier,...).

A titre d'exemple, un module d'entrées/sorties peut comporter entre 1 à 32 voies E/S, un automate PLC pouvant être capable suivant les modèles de gérer plusieurs centaines de voies E/S. En cas de besoin, plusieurs racks sont donc connectés entre eux dans un même PLC. Ainsi, en fonction de l'application et du process à automatiser, un automate PLC peut comporter un grand nombre de modules. C'est l'utilisateur de l'automate PLC qui décide donc du nombre et du positionnement des modules dans un rack, en fonction de son application.

II existe des bus parallèles de transmission fond de panier, mais désormais, le bus de transmission fond de panier est souvent un bus série. Généralement, un bus série comprend plusieurs lignes de transmission bidirectionnelles et est du type multipoints au sens où les lignes bidirectionnelles passent par tous les éléments de connexion et connecteurs associés aux différents modules connectés au bus.

L'impédance équivalente de chaque ligne du bus fond de panier (ligne + connecteurs modules + capacité d'entrée des modules) varie énormément en fonction du nombre de modules connectés et de leur emplacement respectif dans le rack, rendant le dimensionnement des signaux du bus difficile voire impossible (= désadaptation des signaux). Le dimensionnement de chaque ligne multipoints d'un bus fond de panier, c'est-à-dire principalement la valeur de l'impédance caractéristique Z₀ retenue pour la ligne ainsi que son adaptation à chacune des extrémités des lignes, dépend en effet de la présence ou non des modules sur le fond de panier. Par exemple, plus le nombre de modules connectés sur le bus fond de panier est important, plus l'impédance caractéristique efficace Z_{0eff} est faible.

Or, comme on vient de le voir, c'est l'utilisateur qui en fonction de son application fixe le nombre ainsi que l'emplacement des modules connectés dans un rack. II en résulte naturellement qu'un dimensionnement optimal ne peut pas être obtenu de façon systématique, entraînant alors un risque de consommation élevée due à la faible impédance équivalente de la ligne et un risque de désadaptation des signaux, avec comme conséquence supplémentaire qu'un signal désadapté provoque un rayonnement électromagnétique important et génère plus d'harmoniques.

Ce phénomène d'instabilité est d'autant plus renforcé que la tension des signaux de bus est choisie faible (par exemple une tension de 3,3 V au lieu d'une tension habituelle de 5 V) dans le but de consommer moins d'énergie (technologie dite «low power»). Un dimensionnement a montré que l'approche traditionnelle de lignes multipoints/multiconnecteurs n'est pas adaptée à cette technologie «low power».

Aussi, un but de l'invention est de proposer un dispositif qui permettrait de garantir la capacité du bus de transmission fond de panier, et donc la qualité du signal, quel que soit le nombre de modules connectés et quel que soit leur emplacement.

Pour cela, l'invention propose, sur un bus de transmission fond de panier multipoints, de transformer les lignes de communication bidirectionnelle multipoints en autant de connexions point à point entre le bus et chaque module automate connecté au bus multipoints, et ceci de façon transparente vis à vis des modules connectés.

Conformément à l'invention, ce but est atteint grâce à un dispositif de contrôle de communication point à point entre un module et un bus de transmission, le dispositif comportant un circuit imprimé qui porte le bus de transmission et qui comprend un élément de connexion destiné à connecter le module au bus de transmission. Le circuit imprimé comprend une unité de contrôle de communication disposée entre le bus de transmission et l'élément de connexion, ladite unité comprenant des portes logiques de communication unidirectionnelle, et un circuit logique de commande desdites portes logiques.

Ainsi, le contrôle de la communication bidirectionnelle des signaux du bus vers un module est donc déporté sur le circuit imprimé du fond de panier, ce qui rend l'impédance du bus indépendante du nombre et de l'emplacement des modules connectés. Avantageusement, le bus de transmission multipoints voit en permanence un nombre fixe d'unités de contrôle de communication, et chaque module voit une ligne bidirectionnelle point à point avec l'unité de contrôle de communication correspondante.

Seule se trouve donc modifiée la topologie physique du bus, sans que son principe et les couches supérieures du protocole n'en soient affectés. Le changement de topologie est transparent vis-à-vis des éléments matériels (entrance, sortance, temps d'accès des modules) et du logiciel applicatif qui gère le protocole du bus. Les avantages sont les suivants :
- optimisation de l'intégrité du signal quels que soient le nombre et l'emplacement des modules sur le bus fond de panier,
- réduction du rayonnement électromagnétique émis,
- coût modique grâce à la diminution des contraintes de réalisation du circuit imprimé portant les lignes du bus, car les lignes point à point sont bien moins contraignantes que les lignes multipoints au niveau contrôle d'impédance, connectique sans impédance contrôlée, famille logique standard. Il est ainsi possible de compenser le coût du circuit logique de commande supplémentaire ajouté,
- extension possible à volonté, dans les limites du bus multipoints interne au fond de panier,
- transparence vis-à-vis de l'utilisateur car ne concerne que la couche physique du protocole de communication.

Selon une caractéristique, le circuit de commande est apte à appliquer aux portes logiques des signaux de commande de communication unidirectionnelle établis à partir d'un signal d'état de communication reçu du module.

Selon une autre caractéristique, lesdits signaux de commande sont également établis par le circuit de commande à partir d'un signal représentatif de l'état de fonctionnement du module.

Cette dernière disposition permet de n'autoriser la communication entre le bus et le module que si ce dernier est correctement connecté et en état de communiquer.

Le document US556810 décrit un système permettant de sécuriser la connexion/déconnexion d'un module d'extension relié par un connecteur au bus de transmission d'un équipement électronique, en isolant électriquement les lignes de connexion puissance et data durant cette manipulation. Pour cela, le système comporte des moyens pour détecter un mouvement du module d'extension, ces moyens permettant alors à un circuit de commande d'isoler ou de mettre en haute impédance (tri-stated) les lignes de connexion, de façon à éviter des surtensions ou parasites. Cependant, ce système ne permet pas d'autoriser la communication entre le bus et le module seulement lorsque ce dernier est correctement connecté et est en état de communiquer.

L'invention permet en effet de résoudre un autre problème technique lié à l'utilisation d'un automate. En fonctionnement normal, si un des modules devient hors service, on veut pouvoir le remplacer sans interférer avec les autres modules de l'automate PLC. Il faut donc pouvoir extraire le module défaillant alors qu'il est sous tension, puis insérer un module de remplacement, sans perturber le reste de la configuration de l'automate et le déroulement du programme. C'est ce qu'on appelle la fonction de remplacement à chaud ou «hot swap». La même situation se présente lorsque le client utilisateur décide, en fonction de son application ou de son process, de retirer un module d'un emplacement d'un rack et/ou d'en ajouter un dans un emplacement vide.

Pour résoudre les difficultés liées à l'interchangeabilité des modules à chaud, une première solution a été proposée consistant à réaliser un séquencement dans le temps de la connexion électrique entre l'élément de connexion de fond de panier et le connecteur présent sur le module en fonction des signaux appliqués, de manière par exemple à assurer l'ordre de connexion suivant lors de l'insertion d'un module : masse, tension positive d'alimentation, signaux utiles, etc. A cet effet, la solution proposée connue prévoit de donner des longueurs différentes, conformément à l'ordre de connexion souhaitée, aux différentes broches de l'élément de connexion de fond de panier ou du connecteur du module.

L'avantage de cette solution est d'être sûr du séquencement des signaux à l'insertion et à l'extraction du module du fond de panier. Par exemple, le signal de masse reste toujours connecté plus longtemps que la tension positive d'alimentation, donc la broche correspondante sera plus longue.

Par contre, ce système connu présente plusieurs inconvénients, notamment l'usure mécanique ainsi que son coût puisqu'il utilise des connecteurs spécifiques non standards. De plus, il faut prévoir une importante longueur des broches de façon à créer des écarts de longueur suffisants pour obtenir des intervalles de temps nécessaires aux séquences d'insertion/extraction. Ces longueurs importantes pour les broches des connecteurs peuvent s'avérer incompatibles avec l'encombrement total de l'automate programmable.

Une deuxième solution existante consiste à insérer le connecteur du module dans l'élément de connexion de fond de panier par rotation autour d'un axe, ce qui permet d'obtenir que les broches proches de l'axe de rotation soient connectées avant celles qui en sont les plus éloignées, lors de l'insertion d'un module suivant un mouvement de rotation autour de l'axe.

L'avantage de ce système est identique à celui qui a été précédemment décrit. Son principal inconvénient est d'imposer des spécifications supplémentaires à des connecteurs non prévus initialement pour cette fonction. De plus, le tolérancement est difficile à réaliser pour des produits de petites dimensions car les connecteurs vont comporter des broches se trouvant très proches les unes des autres, et il peut donc être difficile d'avoir un comportement reproductible en toute circonstance.

Aussi, un autre but de l'invention est de proposer un dispositif qui permettrait l'insertion à chaud d'un module sur le bus de transmission, sans perturber le fonctionnement des autres modules déjà présents ni perturber les signaux de communication circulant sur le bus, et tout en évitant les contraintes mécaniques liées à la réalisation des broches et connecteurs comme dans les systèmes connus décrits plus haut.

Pour cela, selon une autre caractéristique, le dispositif de l'invention comporte des moyens qui sont présents dans le module pour générer le signal représentatif de l'état de fonctionnement du module. Lesdits moyens pour générer le signal de validation comprennent un composant logique qui reçoit en entrée au moins un signal d'entrée caractéristique d'un état du module et qui fournit ledit signal de validation uniquement lorsque ledit signal d'entrée est représentatif d'un état de fonctionnement du module compatible avec la mise en communication du module avec le bus de transmission.

Selon une autre caractéristique, le circuit de commande comprend une porte logique OU entre une pluralité de signaux d'état reçus d'une pluralité de modules, ladite porte OU étant apte à fournir un signal d'état commun de communication relatif à la pluralité de modules. La pluralité de modules connectés à une porte logique OU constitue alors un «module virtuel». Un ensemble de modules virtuels peut être assemblé de la même manière que les modules individuels réels, et ainsi de suite sur plusieurs niveaux hiérarchiques. Cette hiérarchie permet d'optimiser le routage et limiter la charge capacitive au niveau des lignes multipoints.

L'invention décrit également un équipement d'automatisme comprenant un bus de transmission et une pluralité de modules susceptibles de se connecter au bus de transmission et comportant au moins un tel dispositif de contrôle de communication.

Selon l'invention, l'équipement d'automatisme peut également comporter un système mécanique d'insertion et d'extraction du module par rotation autour d'un axe. Ce système permet notamment de séquencer l'ordre de disparition de signaux au moment du mouvement de rotation effectué durant l'extraction du module. Par exemple, le point commun (OV) de l'alimentation électrique du module peut être appliqué en un point de l'élément de connexion situé à proximité dudit axe de rotation, et ladite entrée de commande est reliée à un point de l'élément de connexion situé à proximité d'une extrémité de l'élément de connexion opposée audit axe de rotation.

Cette utilisation combine le dispositif conforme à l'invention et le système d'insertion/extraction par rotation décrit plus haut. Cette combinaison est en effet réalisable même avec de faibles dimensions de l'équipement d'automatisme, car le dispositif de l'invention a permis de réduire le nombre de broches contraintes et il est alors plus facile de les espacer, pour obtenir un écart suffisant.

Par ailleurs, il découle de la définition qui vient d'être donnée de l'invention que celle-ci n'est pas limitée au seul domaine des automates programmables et qu'elle s'étend à tout système modulaire basé sur un bus de transmission du type «fond de panier» moyen débit et bas coût, mais où la notion d'intégrité de signal est primordiale.

D'autres caractéristiques et avantages vont apparaître dans la description détaillée qui suit en se référant à un mode de réalisation donné à titre d'exemple et représenté par les dessins annexés sur lesquels :
- la figure 1 donne un schéma de principe d'un dispositif de contrôle de communication point à point conforme à l'invention,
- la figure 2 représente très schématiquement un exemple classique de bus fond de panier dans un automate programmable.

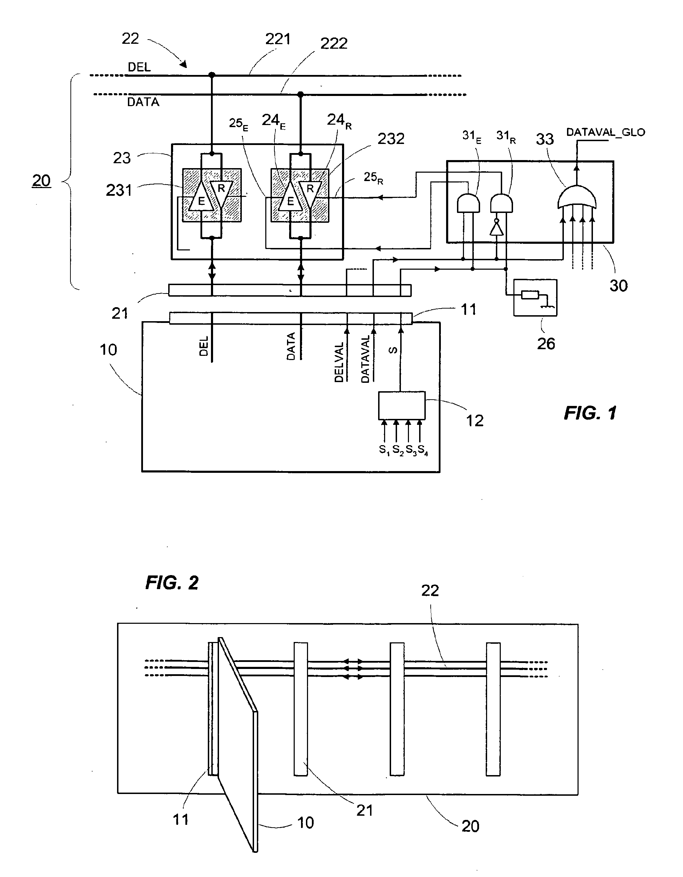

En référence à la figure 2, un équipement d'automatisme modulaire du type automate programmable, présente une partie fixe de type fond de panier («backplane») qui comprend un circuit imprimé 20 de fond de panier, sur lequel plusieurs modules 10, tels que des modules E/S, peuvent être connectés ou déconnectés à volonté. Ce circuit imprimé 20 porte un bus de transmission multipoints 22 desservant les différents emplacements de modules de l'équipement d'automatisme.

Le circuit fond de panier 20 comporte une pluralité d'éléments de connexion 21, de type broches ou connecteurs fond de panier, chacun étant destiné à recevoir un connecteur 11 correspondant (de type broches ou connecteur complémentaire de l'élément de connexion 21) d'un module 10 lorsque celui-ci est inséré dans un emplacement du rack de l'équipement d'automatisme. Une fois inséré, la liaison électrique entre l'élément de connexion 21 et le connecteur 11 du module 10 permet notamment au module 10 d'être électriquement alimenté et d'être susceptible de communiquer avec d'autres modules de l'équipement d'automatisme au travers du bus de transmission 22.

Le bus 22 correspondant à l'exemple de la figure 1 est un bus série multipoints comportant principalement deux lignes 221, 222 de transmission bidirectionnelle :
- une ligne 221 DEL (pour délimiteur) qui correspond à une horloge de bus fournie au moyen de créneaux (par exemple à une fréquence de l'ordre d'une dizaine de MHz) par le module maître de l'échange de communication,
- une ligne 222 DATA de transport des données réellement échangées sur le bus 22.

Le bus série 22 est à maître flottant. La désignation du module maître est déterminée par une ligne supplémentaire du bus, non représentée et appelée voie d'arbitrage, dont le fonctionnement est indépendant des dispositions de l'invention. Cette voie d'arbitrage bidirectionnelle est en effet gérée directement en multipoints entre les différents modules, ce qui ne présente pas d'inconvénients car la fréquence de ce signal d'arbitrage est beaucoup plus faible que les autres signaux du bus.

Un module maître peut prendre l'initiative d'un échange sur le bus. Un module esclave est en permanence à l'écoute du bus et ne peut que répondre à une requête du module maître. Par défaut, tous les modules qui n'émettent pas écoutent. Lorsqu'un module n'est pas maître, il doit donc rester en réception à l'écoute d'une requête éventuelle émise par le maître du bus. A tout moment, un module connaît son rôle : soit il est le maître et donc l'émetteur unique sur le bus, soit il est à l'écoute du bus. La voie d'arbitrage permet de gérer la désignation du module maître flottant.

En réalité, la ligne DATA 222 est composée de deux signaux, à savoir un signal DATA bidirectionnel transportant effectivement les données et un signal unidirectionnel d'état de communication DATAVAL qui permet de distinguer l'émetteur des données sur le bus 22. Comme le montre la figure 1, ce signal DATAVAL est émis par chaque module 10. Par défaut, un module positionne systématiquement son signal DATAVAL de façon à être en permanence récepteur des données circulant sur le bus 22, par exemple en donnant à DATAVAL la valeur logique 0. Lorsqu'un module 10 veut émettre, il inverse le signal DATAVAL à la valeur logique 1 pendant toute la durée d'émission de ses données.

Les explications qui viennent d'être données pour la ligne DATA 222 s'appliquent de la même manière à la ligne DEL 221 qui comporte donc en réalité un signal DEL et un signal DELVAL. Par souci de simplification, seul le fonctionnement relatif à la ligne DATA du bus est illustré dans la figure 1.

Selon l'invention, le dispositif de contrôle de communication comprend une unité de contrôle de communication 23 qui est disposée sur le circuit 20 entre l'élément de connexion 21 et les lignes de transmission du bus 22, et qui sert à contrôler la communication entre un module 10 et le bus 22.

L'unité 23 joue ainsi le rôle de barrière logique de communication entre le module 10 et le bus 22. Elle est composée de deux ensembles de communication bidirectionnelle 231, 232 reliés respectivement aux lignes de transmission DEL 221 et DATA 222 du bus 22. Chaque ensemble 231, 232 comprend deux composants de communication unidirectionnelle qui sont disposés tête-bêche l'un par rapport à l'autre afin d'autoriser ou non la communication entre le module 10 et le bus 22 dans l'une ou l'autre direction. Ces composants unidirectionnels sont référencés 24_{E} dans le sens émission (module vers bus) et 24_{R} dans le sens réception (bus vers module). Ils sont constitués, dans l'exemple présenté, par des portes logiques trois états (appelées aussi buffers tri-state).

Ainsi, dans un rack, il existe une unité 23 de contrôle de communication au niveau de chaque emplacement de module dont on veut contrôler la communication avec le bus 22. La présence d'une unité 23 à chaque emplacement de module permet de passer d'un bus fond de panier multipoints à une communication point à point entre chaque unité 23 et le module 10 correspondant.

Chacune des portes logiques trois états 24_{E}, respectivement 24_{R}, comporte une entrée de commande 25_{E}, respectivement 25_{R}, dont le fonctionnement est le suivant :
- si le signal appliqué à l'entrée de commande de la porte logique trois états est un signal de validation de valeur logique 1, l'entrée de la porte logique 24_{E}, respectivement 24_{R}, est recopiée sur la sortie de la porte logique. Le module 10 peut alors communiquer avec le bus 22 en émission, respectivement en réception.
- par contre, si le signal appliqué à l'entrée de commande de la porte logique trois états est un signal de passivation de valeur logique 0, elle se met dans un état haute impédance, ce qui isole sa sortie et toute communication entre le module 10 et le bus 22 est empêchée à travers ce composant.

Avantageusement, lorsque le signal de passivation est appliqué à l'entrée de commande d'une porte logique trois états, cela crée en effet une haute impédance entre les entrées et les sorties de cette porte logique, c'est-à-dire entre les signaux du bus de transmission présents sur le circuit fond de panier et les signaux du bus de transmission présents sur l'élément de connexion du module correspondant.

On peut voir sur la figure 1 que le dispositif de contrôle de communication comporte également un circuit logique de commande 30 destiné notamment à fournir les entrées de commande de communication unidirectionnelle 25_{E} et 25_{R} des portes logiques trois états 24_{E} et 24_{R}, en fonction des signaux d'état DATAVAL et DELVAL fournis par le module 10, comme cela a été expliqué plus haut.

D'autre part, le circuit logique 30 prend également en compte un signal de validation, issu du module 10 et représentatif de l'état de fonctionnement du module 10. La figure 1 montre également que le module 10 comporte un composant électronique logique 12 apte à générer une sortie S connectée en entrée à des portes logiques "ET" (ou "AND") 31_{E} et 31_{R} du circuit logique 30.

La sortie S est générée par le composant logique 12 à partir d'un ou plusieurs signaux d'entrée S₁, S₂, S₃, S₄, ... représentatifs d'un état de fonctionnement du module 10. Le principe est que si le composant logique 12 établit que les valeurs de ce ou ces signaux d'entrée sont compatibles avec une mise en communication satisfaisante du module 10 avec le bus 22, la sortie S fournit un signal de validation de valeur 1 afin d'activer les ensembles 231, 232. A l'inverse, si le module 10 n'est pas prêt à communiquer du fait qu'au moins un des signaux d'entrée S₁, S₂, S₃, S₄, ... indique que le module 10 n'est pas dans un état compatible pour une communication satisfaisante avec le bus 22, la sortie S du composant logique 12 fournit un signal de passivation de valeur 0, ce qui inhibe les ensembles 231, 232.

Dans le cadre de réalisations très simples, un seul signal d'entrée S₁ du composant logique 12 peut être envisagé, notamment en étant relié à la tension positive (par exemple +5V) du module via une résistance. Dans ce cas, le signal de validation de valeur 1 indique seulement que le module 10 est bien alimenté.

En pratique, il est cependant préférable que la sortie S du composant logique 12 résulte d'une combinaison d'un ensemble de conditions logiques établies sur une pluralité de signaux S₁, S₂, S₃, S₄, ... caractéristiques de différents états ou fonctionnements du module 10, comme par exemple la présence d'alimentation(s) du module, l'absence de défaut sur le module, la confirmation d'une bonne exécution d'une séquence de test ou d'initialisation du module, etc... Ceci permet de s'assurer que le module 10 est non seulement correctement alimenté mais également en état de fonctionner correctement avant qu'il ne soit mis en communication avec le bus 22.

On peut aussi envisager une séquence logique de démarrage à exécuter avant de délivrer le signal de validation : détection d'un seuil de tension suffisante dans le module, puis étape d'attente pour s'assurer de la complétude d'insertion des signaux et la précharge de condensateurs, puis exécution d'une séquence d'amorçage à l'intérieur du module, etc.

Indifféremment, le composant logique 12 peut être intégré à un microprocesseur du module 10 ou peut constituer un composant particulier.

On peut également voir sur la figure 1 la présence sur le circuit fond de panier 20 d'un module de passivation 26 destiné à générer un signal de passivation par rappel à la masse à travers une résistance de faible valeur lorsque le module 10 n'est pas connecté au fond de panier, et donc lorsque la sortie S n'est pas présente sur l'élément de connexion 21. Ainsi, quand le module 10 n'est pas inséré dans le rack, on assure avantageusement en permanence l'isolation entre les signaux du bus 22 sur le circuit fond de panier 20 et l'élément de connexion 21.

Il est évident que, suivant le type et les caractéristiques des ensembles de communication bidirectionnelle 231, 232 utilisés, les valeurs des signaux logiques de validation et de passivation appliqués aux entrées de commande 25_{E} et 25_{R} pourraient indifféremment être inversées, à savoir 0 pour le signal de validation et 1 pour le signal de passivation. Dans ce cas, la génération de la sortie S serait modifiée en conséquence et la résistance du module 26 serait rappelée à la tension positive du circuit 20.

Le signal DATAVAL et la sortie S d'état de fonctionnement du module 10 sont traités par les portes "ET" 31_{E} et 31_{R} du circuit logique 30. Dans l'exemple présenté, la porte "ET" 31_{E} reçoit directement en entrée la sortie S et le signal DATAVAL et fournit une sortie reliée à l'entrée de commande de communication unidirectionnelle 25_{E} pour piloter la porte 24_{E} correspondante. La porte "ET" 31_{R} reçoit en entrée la sortie S et l'inverse du signal DATAVAL et fournit une sortie reliée à l'entrée de commande de communication unidirectionnelle 25_{R} pour piloter la porte 24_{R} correspondante. Le fonctionnement est alors le suivant :
- Si la sortie S fournit un signal de validation (c'est-à-dire par exemple = 1), indiquant que le module 10 est prêt à communiquer, et si le signal DATAVAL est à 1, indiquant que le module 10 est prêt à émettre sur le bus 22, alors l'entrée de commande 25_{E} du composant unidirectionnel d'émission 24_{E} de l'ensemble 232 associé à la ligne DATA 222 est validée, tandis que l'entrée de commande 25_{R} du composant de réception 24_{R} est invalidée (composant 24_{R} à l'état haute impédance). On autorise ainsi uniquement la communication dans le sens émission (c'est-à-dire direction module 10 vers bus 22).
- Si la sortie S fournit un signal de validation et si le signal DATAVAL est à 0 indiquant que le module 10 est en attente de réception de messages venant du bus 22, alors l'entrée de commande 25_{R} du composant de réception 24_{R} associé à la ligne DATA 222 est validée, tandis que l'entrée de commande 25_{E} du composant d'émission 24_{E} est invalidée (composant 24_{E} à l'état haute impédance). On autorise ainsi uniquement la communication dans le sens réception (c'est-à-dire direction bus 22 vers module 10).
- Si la sortie S fournit un signal de passivation (c'est-à-dire = 0) indiquant que le module 10 est absent, mal inséré ou hors d'état de communiquer, les entrées de commande 25_{E} et 25_{R} valent 0 et cela crée une haute impédance entre les entrées et les sorties des deux composants unidirectionnels 24_{E} et 24_{R} de l'ensemble 232, empêchant ainsi toute communication du module 10 avec la ligne DATA 222 du bus 22. De cette manière, le bus fond de panier n'est pas affecté par d'éventuels signaux parasites durant l'extraction du module 10 et lorsque le module 10 est absent.

Le fonctionnement décrit ci-dessus est identique pour le signal DELVAL associé à la sortie S et les composants unidirectionnels de l'ensemble 231 gérant la ligne DEL 221 du bus 22.

On peut donc observer que le bus 22 voit ainsi toujours le même nombre d'unités de contrôle de communication 23 quels que soient le nombre et l'emplacement des modules réellement présents dans le rack et en état de fonctionner. L'impédance et la topologie sont fixes puisque indépendantes précisément du nombre et de l'emplacement des modules.

Par ailleurs, l'utilisation des signaux DATAVAL et DELVAL, déjà disponibles au niveau du module 10, permet une réalisation à moindre coût du circuit de commande 30 des composants unidirectionnels 24_{E} et 24_{R}.

De préférence, le circuit de commande 30 est constitué d'un module logique réalisé en technologie CPLD («Complex Programmable Logical Device»). Un module CPLD est un composant comprenant des portes logiques préprogrammées dans une mémoire interne de type FLASH. Il permet d'exécuter rapidement à moindre coût des équations logiques élémentaires simples entre différents signaux, sans nécessiter de microprocesseur ou d'ASIC spécifique.

Pour des raisons d'optimisation et de coût, un seul module CPLD 30 peut traiter la logique correspondant à une pluralité d'emplacements sur le bus 22 et peut donc gérer plusieurs unités de contrôle de communication 23, par exemple quatre. C'est un compromis entre modularité et coût. Dans ce cas, pour un rack à 12 emplacements, seulement trois modules CPLD seraient alors nécessaires.

En outre, il peut être plus avantageux d'implémenter les différents ensembles bidirectionnels 231 et 232 en dehors des modules CPLD, de manière à placer ces ensembles au plus près des éléments de connexion 21 et donc de minimiser la distance de la connexion point à point entre l'unité 23 et le module 10.

Afin de réduire encore les coûts, les ensembles bidirectionnels 231, 232 utilisent une technologie logique standard bon marché, comme par exemple LVC, TTL, CMOS.

Par ailleurs, le circuit de commande 30 comprend une porte "OU" (ou "OR") 33 qui reçoit les signaux d'état de communication DATAVAL des différents modules 10 connectés à des emplacements qui sont gérés par ce même circuit de commande 30. En sortie, la porte "OU" 33 fournit un signal global d'état de communication DATAVAL_GLO, qui est l'image de l'ensemble des modules gérés par le circuit 30. De même, le circuit 30 comprend aussi une autre porte "OU" non représentée sur la figure 1 recevant les signaux DELVAL pour fournir un signal global DELVAL_GLO.

Ainsi, l'ensemble des modules gérés par le circuit 30 constituent alors un «module virtuel global» fournissant les signaux globaux d'état de communication DATAVAL_GLO et DELVAL_GLO (de manière équivalente à un module 10 qui fournit les signaux DATAVAL et DELVAL). Comme indiqué plus haut, des ensembles de tels modules virtuels peuvent être connectés de la même façon, et ainsi de suite sur plusieurs niveaux de hiérarchie.

## Revendications

1. Dispositif de contrôle de communication point à point entre un module (10) et un bus de transmission (22), le dispositif comportant un circuit imprimé (20) qui porte le bus de transmission (22) et qui comprend un élément de connexion (21) destiné à connecter le module (10) au bus de transmission (22), **caractérisé en ce que** le circuit imprimé (20) comporte :
- une unité de contrôle de communication (23) disposée entre le bus de transmission (22) et l'élément de connexion (21), ladite unité (23) comprenant au moins un ensemble de communication bidirectionnelle (231, 232) doté de portes logiques trois états de communication unidirectionnelle (24_{E}, 24_{R}) disposées tête-bêche l'une par rapport à l'autre,
- un circuit logique de commande (30) des portes logiques (24_{E}, 24_{R}) qui applique aux portes logiques (24_{E}, 24_{R}) des signaux de commande (25_{E}, 25_{R}) de communication unidirectionnelle, établis à partir d'un signal d'état de communication (DATAVAL, DELVAL) reçu du module (10).

2. Dispositif selon la revendication 1, **caractérisé en ce que** chaque porte logique (24_{E}, 24_{R}) est dans un état haute impédance en l'absence du signal de commande correspondant (25_{E}, 25_{R}).

3. Dispositif selon la revendication 1, **caractérisé en ce que** le circuit de commande (30) comprend une porte logique OU (33) recevant en entrée une pluralité de signaux d'état de communication (DATAVAL, DELVAL) d'une pluralité de modules (10), et fournissant en sortie un signal global d'état de communication (DATAVAL_GLO, DELVAL_GLO) relatif à ladite pluralité de modules.

4. Dispositif selon la revendication 1, **caractérisé en ce que** le circuit de commande (30) est réalisé en technologie CPLD.

5. Dispositif selon la revendication 1, **caractérisé en ce que** les signaux de commande (25_{E}, 25_{R}) sont également établis par le circuit de commande (30) à partir d'un signal de validation représentatif de l'état de fonctionnement du module (10).

6. Dispositif selon la revendication 5, **caractérisé en ce qu'**il comporte des moyens (12) présents dans le module (10) pour générer ledit signal de validation représentatif de l'état de fonctionnement du module (10).

7. Dispositif selon la revendication 6, **caractérisé en ce que** lesdits moyens pour générer le signal de validation comprennent un composant logique (12) qui reçoit en entrée au moins un signal d'entrée (S₁, S₂, S₃, S₄) caractéristique d'un état du module (10) et qui délivre une sortie (S), ladite sortie (S) générant ledit signal de validation lorsque ledit signal d'entrée (S₁, S₂, S₃, S₄) est représentatif d'un état de fonctionnement du module compatible avec la mise en communication du module (10) avec le bus de transmission (22).

8. Dispositif selon la revendication 1, **caractérisé en ce que** l'unité de contrôle de communication (23) comprend deux ensembles de communication bidirectionnelles (231, 232) dotés chacun de deux portes logiques unidirectionnelles (24_{E}, 24_{R}) disposées tête-bêche l'une par rapport à l'autre.

9. Equipement d'automatisme comprenant un bus de transmission (22) et une pluralité de modules (10) susceptibles de se connecter au bus de transmission (22), **caractérisé en ce qu'**il comporte au moins un dispositif de contrôle de communication selon l'une des revendications précédentes.

## Claims

1. Device for controlling point-to-point communication between a module (10) and a transmission bus (22), the device comprising a printed circuit (20) which carries the transmission bus (22) and which comprises a connection element (21) to connect the module (10) to the transmission bus (22), **characterized in that** the printed circuit (20) comprises:
- a communication control unit (23) disposed between the transmission bus (22) and the connection element (21), the communication control unit (23) comprising at least one bidirectional communication assembly (231, 232) including unidirectional communication three-state logic gates (24_{E}, 24_{R}) disposed mutually head-to-tail,
- a logic control circuit (30) of the logic gates (24_{E}, 24_{R}), which applies unidirectional communication control signals (25_{E}, 25_{R}) to the logic gates (24_{E}, 24_{R}), established on the basis of a communication state signal (DATAVAL, DELVAL) received from the module.

2. Device according to Claim 1, **characterized in that** each logic gate (24_{E}, 24_{R}) is in a high-impedance state in the absence of the corresponding control signal (25_{E}, 25_{R}).

3. Device according to Claim 1, **characterized in that** the control circuit (30) comprises a logic OR gate (33) receiving as input a plurality of communication state signals (DATAVAL, DELVAL) for a plurality of modules (10), and providing as output a global communication state signal (DATAVAL_GLO, DELVAL_GLO) relating to the said plurality of modules.

4. Device according to Claim 1, **characterized in that** the control circuit (30) is embodied by CPLD technology.

5. Device according to Claim 1, **characterized in that** the control signals (25_{E}, 25_{R}) are also established by the control circuit (30) on the basis of a validation signal representative of the operating state of the module (10).

6. Device according to Claim 5, **characterized in that** it comprises means (12) present in the module (10) for generating the said validation signal representative of the operating state of the module (10).

7. Device according to Claim 6, **characterized in that** the said means for generating the validation signal comprise a logic component (12) which receives as input at least one input signal (S₁, S₂, S₃, S₄) characteristic of a state of the module (10) and which delivers an output (S), the said output (S) generating the said validation signal when the said input signal (S₁, S₂, S₃, S₄) is representative of an operating state of the module compatible with the placing of the module (10) in communication with the transmission bus (22).

8. Device according to Claim 1, **characterized in that** the communication control unit (23) comprises two bidirectional communication assemblies (231, 232) each furnished with two unidirectional logic gates (24_{E}, 24_{R}) disposed mutually head-to-tail.

9. Automatic control facility comprising a transmission bus (22) and a plurality of modules (10) capable of connecting to the transmission bus (22), **characterized in that** it comprises at least one communication control device according to one of the preceding claims.

## Patentansprüche

1. Vorrichtung zur Kontrolle einer Punkt-zu-Punkt-Kommunikation zwischen einem Modul (10) und einem Übertragungsbus (22), wobei die Vorrichtung eine gedruckte Schaltung (20) aufweist, die den Übertragungsbus (22) trägt und die ein Verbindungselement (21) enthält, das dazu bestimmt ist, das Modul (10) mit dem Übertragungsbus (22) zu verbinden, **dadurch gekennzeichnet, dass** die gedruckte Schaltung (20) aufweist:
- eine Kommunikationkontrolleinheit (23), die zwischen dem Übertragungsbus (22) und dem Verbindungselement (21) angeordnet ist, wobei die Einheit (23) mindestens eine bidirektionale Kommunikationsanordnung (231, 232) enthält, die mit Tristate-Logikgattern unidirektionaler Kommunikation (24_{E}, 24_{R}) versehen ist, die Kopf bei Fuß zueinander angeordnet sind,
- eine logische Steuerschaltung (30) der Logikgatter (24_{E}, 24_{R}), die an die Logikgatter (24_{E}, 24_{R}) Steuersignale (25_{E}, 25_{R}) unidirektionaler Kommunikation anlegt, die ausgehend von einem Kommunikationszustandssignal (DATAVAL, DELVAL) hergestellt werden, das vom Modul (10) empfangen wird.

2. Vorrichtung nach Anspruch 1, **dadurch gekennzeichnet, dass** jedes Logikgatter (24_{E}, 24_{R}) in Abwesenheit des entsprechenden Steuersignals (25_{E}, 25_{R}) in einem Zustand hoher Impedanz ist.

3. Vorrichtung nach Anspruch 1, **dadurch gekennzeichnet, dass** die Steuerschaltung (30) ein logisches ODER-Gatter (33) enthält, das am Eingang mehrere Kommunikationszustandssignale (DATAVAL, DELVAL) von mehreren Modulen (10) empfängt und am Ausgang ein globales Kommunikationszustandssignal (DATAVAL_GLO, DELVAL_GLO) bezüglich der mehreren Module liefert.

4. Vorrichtung nach Anspruch 1, **dadurch gekennzeichnet, dass** die Steuerschaltung (30) in der CPLD-Technologie ausgeführt ist.

5. Vorrichtung nach Anspruch 1, **dadurch gekennzeichnet, dass** die Steuersignale (25_{E}, 25_{R}) ebenfalls von der Steuerschaltung (30) ausgehend von einem Validierungssignal hergestellt werden, das für den Betriebszustand des Moduls (10) repräsentativ ist.

6. Vorrichtung nach Anspruch 5, **dadurch gekennzeichnet, dass** sie im Modul (10) vorhandene Einrichtungen (12) aufweist, um das Validierungssignal zu erzeugen, das für den Betriebszustand des Moduls (10) repräsentativ ist.

7. Vorrichtung nach Anspruch 6, **dadurch gekennzeichnet, dass** die Einrichtungen zur Erzeugung des Validierungssignals ein logisches Bauteil (12) enthalten, das am Eingang mindestens ein Eingangssignal (S₁, S₂, S₃, S₄) empfängt, das für einen Zustand des Moduls (10) charakteristisch ist, und das einen Ausgang (S) liefert, wobei der Ausgang (S) das Validierungssignal erzeugt, wenn das Eingangssignal (S₁, S₂, S₃, S₄) für einen Betriebszustand des Moduls repräsentativ ist, der mit der Verbindung des Moduls (10) mit dem Übertragungsbus (22) kompatibel ist.

8. Vorrichtung nach Anspruch 1, **dadurch gekennzeichnet, dass** die Kommunikationskontrolleinheit (23) zwei bidirektionale Kommunikationsbaueinheiten (231, 232) enthält, die je mit zwei unidirektionalen Logikgattern (24_{E}, 24_{R}) versehen sind, die Kopf bei Fuß zueinander angeordnet sind.

9. Automatisierungsgerät, das einen Übertragungsbus (22) und mehrere Module (10) enthält, die sich mit dem Übertragungsbus (22) verbinden können,
**dadurch gekennzeichnet, dass** es mindestens eine Kommunikationskontrollvorrichtung nach einem der vorhergehenden Ansprüche aufweist.
